(19) Europäisches Patentamt / European Patent Office / Office européen des brevets

(11) **EP 3 370 046 B1**

(12) **EUROPÄISCHE PATENTSCHRIFT**

(45) Veröffentlichungstag und Bekanntmachung des Hinweises auf die Patenterteilung:
**11.09.2019 Patentblatt 2019/37**

(51) Int Cl.:
*G01H 1/00* (2006.01)   *G01P 3/44* (2006.01)
*G01P 3/48* (2006.01)

(21) Anmeldenummer: **18155575.6**

(22) Anmeldetag: **07.02.2018**

(54) **VERFAHREN UND VORRICHTUNG ZUR BESTIMMUNG VON MASCHINENDREHZAHLEN**

METHOD AND DEVICE FOR DETERMINING MACHINE SPEEDS

PROCÉDÉ ET DISPOSITIF DE DÉTERMINATION DE VITESSE DE ROTATION DE MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2017 DE 102017104207**

(43) Veröffentlichungstag der Anmeldung:
**05.09.2018 Patentblatt 2018/36**

(73) Patentinhaber: **Prüftechnik Dieter Busch GmbH 85737 Ismaning (DE)**

(72) Erfinder:
• **Brunn, Dietrich**
 **85774 Unterföhring (DE)**
• **Germer, Jan**
 **81667 München (DE)**

(56) Entgegenhaltungen:
DE-A1-102004 010 263   US-A- 5 744 723
US-A- 6 087 796

EP 3 370 046 B1

**Beschreibung**

Die Erfindung betrifft ein Verfahren und eine Vorrichtung zum Bestimmen von Maschinendrehzahlen anhand von Schwingungsmessungen an der Maschine.

Eine Möglichkeit zur Bestimmung von Maschinendrehzahlen besteht darin, mindestens eine Schwingungsgröße, wie beispielsweise Auslenkung, Geschwindigkeit oder Beschleunigung, mittels eines Sensors an der Maschine als Funktion der Zeit zu erfassen und durch eine geeignete spektrale Transformation dieser Größe zu ermitteln, wobei dann das Spektrum bestehend aus Real- und Imaginärteil, typischerweise unter Berücksichtigung bestimmter Randbedingungen, ausgewertet wird, um die Maschinendrehzahl zu ermitteln bzw. abzuschätzen.

In der US 6,087,796 A ist ein Verfahren beschrieben, bei welchem bei der Auswertung des Leistungsdichtespektrums in einem vorgegebenen Frequenzbereich lokale Maxima identifiziert werden und für jedes identifizierte lokale Maximum eine Wahrscheinlichkeit dafür berechnet wird, dass es sich dabei um die Maschinendrehfrequenz handelt. Bei der Maschine handelt es sich dabei um einen Induktionsmotor, wobei zusätzlich zu der Schwingungsmessung Flussmessungen vorgenommen werden und lokale Maxima im Flussspektrum bestimmt werden, die mit den lokalen Maxima der Schwingungsmessung verglichen werden, um die lokalen Maxima der Schwingungsmessung zu bewerten.

US 2007/0032966 A1 betrifft ein Beispiel zur Drehzahlbestimmung, wobei nicht nur das Schwingungsspektrum sondern auch Phasenbeziehungen von verschiedenen Schwingungskomponenten berücksichtigt werden.

US 5,744,723 A betrifft ein Verfahren zur Drehzahlbestimmung, wobei das mittels Schwingungsmessung erfasste Schwingungsspektrum mit einem Referenzschwingungsspektrum für eine bekannte Drehzahl verglichen wird und ein Spreizungsfaktor aus dem Vergleich der beiden Spektren ermittelt wird, aus welchem die Drehzahl ermittelt wird.

GB 2466472 A betrifft ein Verfahren zur Drehzahlbestimmung an einem Induktionsmotor, wobei im Schwingungsspektrum nach Paaren von lokalen Maxima gesucht wird, die sich aus der Rotationsfrequenz bzw. der Motorversorgungsfrequenz ergeben, wobei auch höhere Harmonische berücksichtigt werden.

US 5,530,343 A betrifft eine Apparatur zur Bestimmung der Drehzahl eines Induktionsmotors durch Messung des magnetischen Flusses. Mittels Spektralanalyse und Vergleichsanalyse von Gruppen von Spitzen im Spektrum wird die Motordrehzahl bestimmt.

DE 10 2004 010 263 A1 betrifft ein Verfahren zur Drehzahlerfassung von Turboladern, wobei aus aufgenommenem Körperschall ein Schätzwert der Drehzahl ermittelt wird, um ein Frequenzsignal zu bestimmen, das mit der größten Wahrscheinlichkeit mit dem Schätzwert korreliert.

Es ist Aufgabe der vorliegenden Erfindung, ein Verfahren und eine Vorrichtung zur Bestimmung von Maschinendrehzahlen zu schaffen, wobei eine besonders zuverlässige Ermittlung der Hauptdrehzahl der Maschine ermöglicht werden soll.

Diese Aufgabe wird erfindungsgemäß gelöst durch ein Verfahren gemäß Anspruch 1 bzw. ein System gemäß Anspruch 15.

Bei der Erfindung wird eine besonders zuverlässige Ermittlung der Hauptdrehzahl der Maschine insbesondere durch folgende Maßnahmen ermöglicht: Zum einen kann, im Gegensatz zu den Standardverfahren die auf der Berechnung frequenzdiskreter Spektren mittels der FFT oder DFT basieren, das zugrundeliegende frequenzkontinuierliche Spektrum durch Frequenzinterpolation, z.B. durch Überabtastung oder durch Frequenzverschiebung, mit im Prinzip frei wählbarer Genauigkeit approximiert werden. Zum anderen wird basierend auf diesem Spektrum die Hauptdrehzahl aus der Frequenz ermittelt, bei welcher eine unter Berücksichtigung von Randbedingungen berechnete spektrale Wahrscheinlichkeitsdichte maximal wird, wobei die Randbedingungen den zulässigen Frequenzbereich der erwarteten Hauptdrehzahl, einen Satz von auf die Hauptdrehzahl bezogenen relativen Frequenzen in Form von Frequenzmultiplikatoren sowie einen Gewichtungsfaktor für die jeweilige relative Frequenz beinhalten. Die Wahrscheinlichkeitsdichte ergibt sich für jede Frequenz des zulässigen Frequenzbereichs als Summe der mit dem jeweiligen Gewichtsfaktor gewichteten Amplitude des Spektrums bei der mit dem jeweiligen Frequenzmultiplikator multiplizierten Frequenz.

Typischerweise handelt es sich bei den relativen Frequenzen um höhere Harmonische der Hauptdrehzahl. Vorzugsweise wird das Spektrum mittels Überabtastung, z.B. mindestens 8-fache Überabtastung, im Frequenzbereich ermittelt.

Die Zuverlässigkeit der Drehzahlbestimmung kann dadurch erhöht werden, dass ein Satz von potenziellen Hauptdrehzahlen ermittelt wird, indem die Berechnung der Wahrscheinlichkeitsdichte und die Ermittlung der Hauptdrehzahl aus dem Maximum der Wahrscheinlichkeitsdichte iterativ ausgeführt werden, indem aus dem aktuellen Spektrum die Anteile der zuletzt ermittelten Hauptdrehzahl und ihrer relativen Frequenzen entfernt werden, um ein korrigiertes Spektrum zu erzeugen, das als Basis für die nächste Iteration dient, bei welcher eine neue potenzielle Hauptdrehzahl aus dem Maximum einer neuen Wahrscheinlichkeitsdichte ermittelt wird, die aus dem korrigierten Spektrum berechnet wird.

Vorzugsweise wird dabei für jede der ermittelten potenziellen Hauptdrehzahlen eine Trust-Wahrscheinlichkeit dafür ermittelt, dass es sich um die gesuchte Maschinenhauptdrehzahl handelt, wobei sich die Trust-Wahrscheinlichkeit einer potenziellen Hauptdrehzahl aus der über alle Frequenzen des zulässigen Frequenzbereichs integrierten Differenz der bei der Ermittlung der jeweiligen potenziellen Hauptdrehzahl verwendeten Wahrscheinlichkeitsdichte und der in der nächsten Iteration verwendeten Wahrscheinlichkeitsdichte ergibt, d.h. es wird eine Differenz der kumulierten Wahrscheinlichkeiten berücksichtigt.

Vorzugsweise wird dabei für jede der ermittelten potenziellen Hauptdrehzahlen ein Trust-Wert angegeben, der sich aus der Trust-Wahrscheinlichkeit ergibt, geteilt durch die über alle Frequenzen des zulässigen Frequenzbereichs integrierte Differenz zwischen der in der ersten Iteration verwendeten Wahrscheinlichkeitsdichte und der aus dem in der letzten Iteration erhaltenen korrigierten Spektrum berechneten Wahrscheinlichkeitsdichte; d.h. bei dem Trust-Wert handelt es sich um eine normierte Trust-Wahrscheinlichkeit, wobei in die Normierung im Wesentlichen die Differenz zwischen dem unkorrigierten Spektrum und dem Rauschanteil des Spektrums eingeht.

Beispielsweise kann ein Trust-Wert von mindestens 70 % verlangt werden, um die zugehörige potenzielle Hauptdrehzahl als Maschinendrehzahl zu akzeptieren.

Weitere bevorzugte Ausführungsformen der Erfindung ergeben sich aus den Unteransprüchen.

Im Folgenden werden Ausgestaltungen der Erfindung beispielhaft anhand der beiliegenden Zeichnungen näher erläutert. Dabei zeigen:

Fig. 1         eine schematische Darstellung eines Beispiels eines Systems zur Ermittlung von Maschinendrehzahlen;

Fig. 2a u. 2b     ein Beispiel eines an einer Maschinen gemessenen Schwingungsspektrums sowie die dazugehörige, aus den ersten drei höheren Harmonischen der Drehfrequenz ermittelte Wahrscheinlichkeitsdichte, wobei in Fig. 2b der Bereich um die Hauptdrehzahl vergrößert dargestellt ist; und

Fig. 3         ein an einer Maschine gemessenes Schwingungsspektrum (oben), das nach sechs Iterationen erhaltene korrigierte Spektrum (Mitte), sowie die pro Iteration erhaltenen Wahrscheinlichkeitsdichten (unten) zeigt.

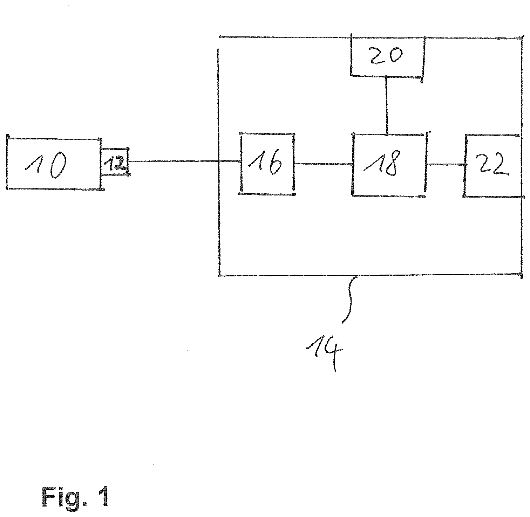

Fig. 1 zeigt schematisch ein Beispiel für ein System zur Bestimmung von Maschinendrehzahlen, wobei eine Maschine 10 mit einem Schwingungssensor 12 versehen ist, der eine Schwingungsgröße, beispielsweise Geschwindigkeit oder Beschleunigung, an der Maschine 10 über die Zeit misst. Der Sensor 12 ist mit einer Auswertungseinrichtung 14 verbunden, welche aus dem Signal des Sensors 12 die Maschinendrehzahl ermittelt. Die Auswertungseinrichtung 14 umfasst eine Einheit 16 zum Transformieren des Zeitsignals des Sensors 12 in den Frequenzbereich, um das komplexe Spektrum der Schwingungsgröße zu erhalten, eine Einheit 18 zum Auswerten des Spektrums, eine Eingabeeinheit 20, mittels welcher beispielsweise Randbedingungen für die Auswertung des Spektrums eingegeben werden können, sowie eine Ausgabeeinheit 22 zum Ausgeben des Ergebnisses der spektralen Auswertung.

Aus einer Schwingungsmessung mittels des Sensors 12 erhält man ein bandbegrenztes, zeitdiskretes Signal einer bestimmten Länge, welches mit einer Abtastfrequenz abgetastet wurde und aus welchem mittels einer Fast-Fourier-Transformation (FFT) ein diskretes Spektrum erhalten wird. Dies ist eine diskretisierte Version der Fouriertransformation

$$X(f) = \mathscr{F}\{x(t)\} := \int_{-\infty}^{\infty} x(t)\, e^{-i2\pi f t}\, dt$$

des Zeitsignals $x(t)$. Um aus der Diskretisierung resultierende Artefakte möglichst zu vermeiden, wird eine Frequenzinterpolation durch Überabtastung im Frequenzbereich verwendet, wobei die Überabtastung vorzugsweise mindestens achtfach ist. Eine solche Überabtastung wird durch Interpolation mit einem geeigneten Kernel erreicht, d.h.

$$\tilde{X}(f) = \mathscr{F}\{x(t)\} * \mathscr{F}\{w_A(t)\}$$

Effizient wird es in diesem Verfahren durch Augmentierung mit Nullen am Zeitsignal und anschließender Fourier-Transformation erreicht. Die Frequenzauflösung einer k-fachen Überabtastung ergibt sich dabei aus

$$\Delta f = \frac{1}{T \cdot (1 + k)}$$

wobei $T$ das Abtastintervall ist. Typischerweise erscheint in Schwingungsspektren nicht nur eine Hauptfrequenz $f_0$ entsprechend der Drehzahl, sondern es treten mehrere zusätzliche lokale Maxima auf, die sich typischerweise als ganzzahlige Vielfache von $f_0$ ergeben ("Höhere Harmonische"). Es können aber auch weitere drehzahlabhängige Komponenten auftreten, bei denen es sich nicht mit um höhere Harmonische handelt, d.h. die sich als nicht ganzzahlige

Vielfache der Hauptfrequenz ergeben, z.B. Zahneingriffsfrequenzen bei Getrieben. Entsprechend kann die Genauigkeit der Ermittlung der Hauptfrequenz aus dem Spektrum dadurch erhöht werden, dass die drehzahlabhängigen Komponenten bei der Bestimmung der Hauptfrequenz mit herangezogen werden.

Dies kann dadurch erreicht werden, dass ein Satz von auf die Hauptdrehzahl bezogenen relativen Frequenzen in Form von Frequenzmultiplikatoren $r_1, ..., r_n$, sowie ein Satz von Gewichtungsfaktoren $w_1, ..., w_n$ für die relative Frequenzen in geeigneter Weise festgelegt werden; dabei wird auch für die Hauptfrequenz $f_0$ (Frequenzmultiplikator $r_0 = 1$) ein Gewichtungsfaktor $w_0$ festgelegt.

$$r = \{1, r_1, \ldots, r_n\}$$

$$\mathrm{w} = \{\mathrm{w}_0, \mathrm{w}_1, \ldots, w_n\}$$

Ferner wird ein Frequenzbereich der erwarteten Hauptfrequenz festgelegt (beispielsweise erwartete Hauptfrequenz $f_0 \pm 10\%$). Es wird dann eine spektrale Wahrscheinlichkeitsdichte $P(f)$ unter Berücksichtigung dieser Randbedingungen berechnet, die sich für jede Frequenz des zulässigen Frequenzbereichs als Summe der mit dem jeweiligen Gewichtungsfaktor gewichteten Amplitude des Spektrums bei der mit dem jeweiligen Frequenzmultiplikator multiplizierten Frequenz ergibt.

$$P(f) = \frac{1}{C} \sum_{k=0}^{n} \mathrm{w}_k |\tilde{X}(r_k f)|$$

Die Normierungskonstante $C$ ergibt sich dabei aus der Bedingung, dass die über den zulässigen Frequenzbereich von $f_l$ bis $f_u$ integrierte Wahrscheinlichkeitsdichte den Wert 1 annimmt.

$$\int_{f_l}^{f_u} P(f)\, \mathrm{d}f = 1$$

Die Hauptdrehzahl ergibt sich dann aus der Frequenz, bei welcher die Wahrscheinlichkeitsdichte $P(f)$ maximal wird. Die relativen Frequenzen sowie ihre Gewichtungsfaktoren werden auf der Basis des typischerweise erwarteten Spektrums festgelegt, wobei gegebenenfalls eine Testmessung erforderlich sein kann, falls vorab nicht genug Informationen über das zu erwartende Signal vorliegen.

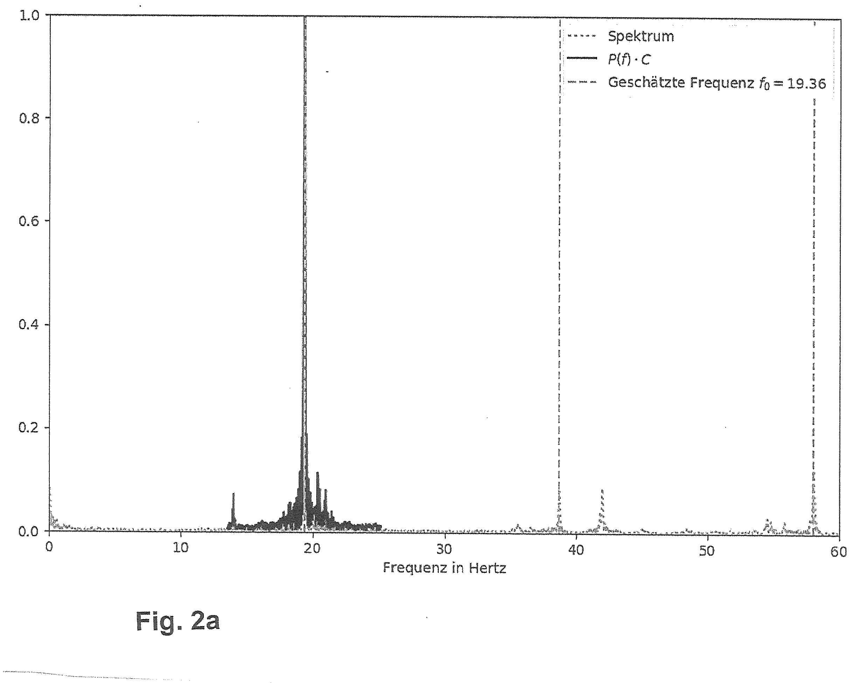

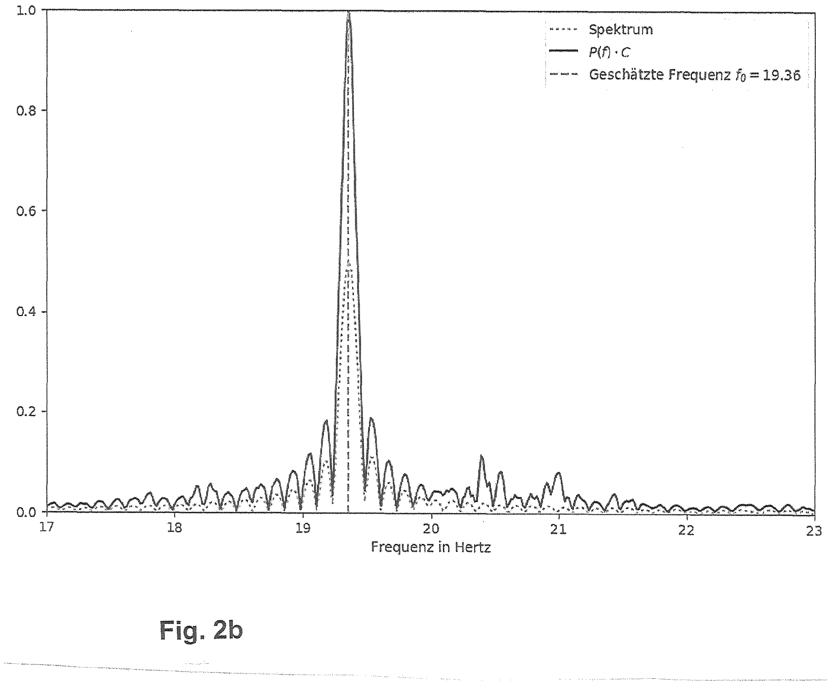

In Fign. 2a und 2b ist ein Beispiel gezeigt für eine Drehzahlbestimmung unter Verwendung der Hauptfrequenz sowie der beiden ersten Harmonischen, die jeweils gleich gewichtet werden wie die Hauptfrequenz, wobei in Fig. 2a das Spektrum mit den beiden Harmonischen und in Fig. 2b das vergrößerte Spektrum im Bereich um die Hauptfrequenz bei etwa 18 Hz vergrößert dargestellt ist, zusammen mit der berechneten Wahrscheinlichkeitsdichte. Das Signal ist dabei um einen Faktor 7 überabgetastet.

Grundsätzlich kann die Wahrscheinlichkeitsdichte auch in einer anderen Größe als der Messgröße bestimmt werden, z.B. in Geschwindigkeit statt in Beschleunigung.

Für Fälle, in welchen im Spektrum mehrere prägnante Frequenzen vorhanden sind, kann das bisher beschriebene Verfahren verbessert werden, indem die Berechnung der Wahrscheinlichkeitsdichte und die Ermittlung der Hauptdrehzahl aus dem Maximum der Wahrscheinlichkeitsdichte iterativ ausgeführt werden, wobei aus dem aktuellen Spektrum die Anteile der zuletzt ermittelten Hauptdrehzahl und ihrer relativen Frequenzen entfernt werden, um ein korrigiertes Spektrum zu erzeugen, das dann als Basis für die nächste Iteration dient, bei welcher eine neue potenzielle Hauptdrehzahl aus dem Maximum der neuen Wahrscheinlichkeitsdichte ermittelt wird, die aus dem korrigierten Spektrum berechnet wird. Für jede der so ermittelten potenziellen Hauptdrehzahlen wird dann eine Wahrscheinlichkeit dafür ermittelt, dass es sich dabei um die gesuchte Maschinendrehzahl handelt.

Bei der Ermittlung der gesuchten Maschinendrehzahl werden dabei folgende Annahmen zugrunde gelegt: Die gesuchte Frequenz liegt in einem bestimmten erwarteten Frequenzbereich; und die Wahrscheinlichkeit, dass eine potenzielle Hauptdrehzahl die gesuchte Maschinendrehzahl ist, ist umso höher, je höher die Amplitude zu dieser Frequenz ist und je höher die Amplituden der zu dieser Frequenz gehörigen relativen Frequenzen sind.

Zunächst wird bei einem solchen iterativen Verfahren beispielsweise wie im Beispiel von Fig. 2 die Wahrscheinlichkeitsdichte P(f) für das ursprüngliche Spektrum ermittelt gemäß:

$$P(f) = \frac{1}{C} \sum_{n=0}^{N} \mathrm{w}_n |\tilde{X}(r_n f)|, \qquad f \in [f_l, f_h]$$

wobei $r_0$ = 1 und $|\tilde{X}(f)|$ der Betrag der Fourier-Transformierten des überabgetasteten Signals ist; die Normierungskonstante $C$ muss für praktische Anwendungen nicht berechnet werden. Die Konstanten $w_n$ und $r_n$ sind dabei basierend auf bekannten Signalen bzw. Testsignalen so gewählt, dass die Wahrscheinlichkeitsdichte $P(f)$ bei $f_0$ maximal wird.

Anschließend werden zu der gefundenen potenziellen Hauptdrehzahl $f_0$ die Beiträge der Frequenzkomponenten bei $r_n{}^*f_0$ aus $\tilde{X} = \tilde{X}_0$, d.h. aus den Fourier-Transformierten, entfernt. Um die Effekte der Fensterung richtig zu berücksichtigen, wird die Fourier-Transformierte $W_A$ eines Zeitfensters $w_A$ benötigt, wobei als Zeitfenster z.B. ein diskretes Rechteckfenster der Länge $M$ mit einer Abtastzeit $T$ hergenommen werden kann:

$$w_A(k) = \begin{cases} \frac{1}{MT} : & \text{für } 0 \leq k < M \\ 0 : & \text{sonst.} \end{cases}$$

Das korrigierte Spektrum $\tilde{X}_1$, aus welchem die Beiträge der zur potenziellen Hauptfrequenz $f_0$ geringen Frequenzkomponenten entfernt wurden, lässt sich wie folgt bestimmen:

$$\tilde{X}_1(f) = \sum_{n=0}^{N} \sum_{f} \left( \tilde{X}_0(f) - \tilde{X}_0(r_n f_0) \cdot W_A(r_n f_0 - f) \right)$$

wobei die innere Summe über alle diskreten Frequenzen $f$ geht. Mit $\tilde{X} = \tilde{X}_1$ lässt sich nun eine neue Wahrscheinlichkeitsdichte $P_1(f)$ und damit $f_1$ bestimmen. Dieses Verfahren lässt sich sukzessive fortführen, wobei man im $i$-ten Iterationsschritt

$$\tilde{X}_i(f) = \sum_{n=0}^{N} \sum_{f} \left( \tilde{X}_{i-1}(f) - \tilde{X}_{i-1}(r_n f_0) \cdot W_A(r_n f_0 - f) \right),$$

$$P_i(f) = \frac{1}{C} \sum_{n=0}^{N} \mathrm{w}_n \tilde{X}_i(r_n \cdot f), \qquad f \in [f_l, f_h],$$

$$f_i = \{ f : P_i(f) = \max P_i(f) \}$$

erhält. Die Normierungskonstante $C$ ergibt sich für $i = 0$ wie oben beschrieben und ist für alle $P_i$ identisch.

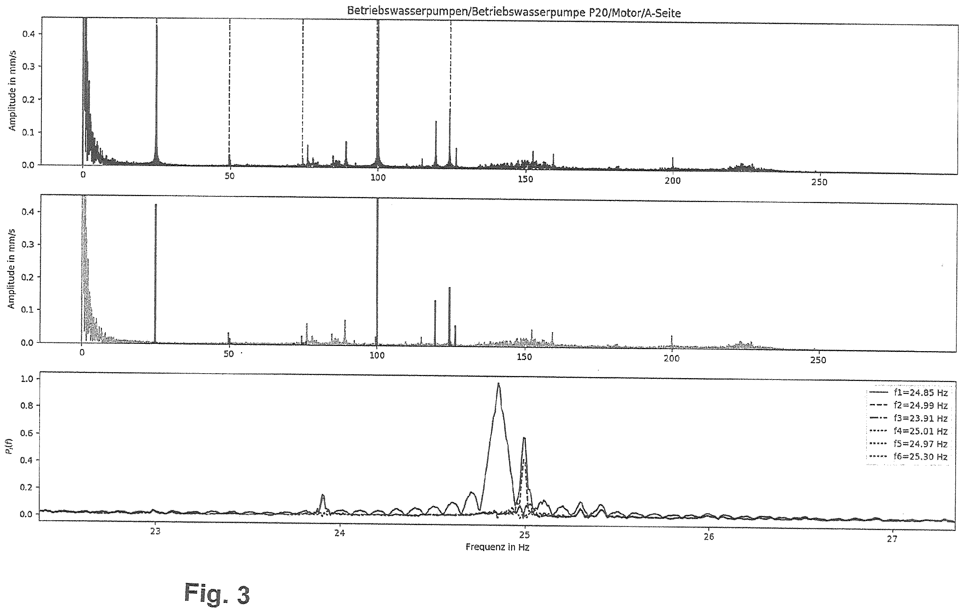

In Fig. 3 ist ein Beispiel für ein iteratives Verfahren gezeigt, wobei das in Fig. 3 oben dargestellte Schwingungsspektrum (bei dem die Motordrehzahl und deren Harmonische als senkrechte Linien eingezeichnet sind) sechs Iterationen zur Ermittlung von potenziellen Hauptdrehzahlen unterzogen wurde, wobei in der Mitte von Fig. 3 das nach sechs Iterationen erhaltene korrigierte Spektrum zusammen mit den aus dem ursprünglichen Spektrum entfernten Spektrallinien eingezeichnet ist, und wobei in Fig. 3 unten die in jeder Iteration erhaltenen unnormierten Wahrscheinlichkeitsdichten $P_i(f)$ gezeigt sind. Bei der Ermittlung der Wahrscheinlichkeitsdichte wurden die jeweilige Hauptfrequenz sowie ihre ersten vier Harmonischen berücksichtigt, wobei die Hauptfrequenz mit dem Faktor 1 und die vier Harmonischen mit einem Faktor 0,5 gewichtet wurden. Das Frequenzband für die gesuchte Frequenz umfasste die erwartete Hauptfrequenz $\pm$ 10%. Bei der Maschine handelt es sich um den Motor einer Betriebswasserpumpe einer Kläranlage, wobei aus Fig. 3 ersichtlich ist, dass zwei nahe beieinander liegende Frequenzen mit hoher Wahrscheinlichkeitsdichte gefunden wurden, nämlich die tatsächliche Maschinendrehzahl bei 24,86 Hz und eine etwas höhere Frequenz bei 24,99 Hz, welche der elektrischen Drehfrequenz des Asynchronmotors entspricht.

In der Regel stellt sich für die mittels des iterativen Verfahrens gefundenen potenziellen Hauptfrequenzen die Frage, welche dieser Frequenzen tatsächlich die gesuchte Maschinendrehzahl wiedergibt. Bei der Beantwortung dieser Frage ist es hilfreich, eine Trust-Wahrscheinlichkeit (bzw. einen normierten Trust-Wert) einzuführen, welcher für die zur Iteration $i$ gehörenden Hauptfrequenz $f_i$ eine Wahrscheinlichkeit dafür zuordnet, dass es sich dabei um die gesuchte Maschinendrehzahl handelt.

$$\Delta p_i = p_i - p_{i+1} = \int_f P_i(f) - P_{i+1}(f)\,\mathrm{d}f$$

Der Zuordnung liegen folgende Überlegungen zugrunde: Bei der Frequenz $f_i$ handelt es sich umso wahrscheinlicher um die gesuchte Frequenz, je größer die Differenz der kumulierten Wahrscheinlichkeiten/Wahrscheinlichkeitsdichten für die Iteration $i$ und die nachfolgende Iteration $i+1$ ist. Die Differenz der kumulierten Wahrscheinlichkeiten ergibt sich dabei als Integral über die Differenz zwischen der Wahrscheinlichkeitsdichte für die vorliegende Iteration und die Wahrscheinlichkeitsdichte für die nachfolgende Iteration über alle zulässigen Frequenzen. Das heißt, je eindeutiger das vorgegebene Muster zu dem Signal passt, desto höher ist die Differenz der kumulierten Wahrscheinlichkeiten $\Delta p_i$. Falls jedoch die Differenz $\Delta p_{i+1} - \Delta p_i$ gleich 0 ist, bedeutet dies, dass die in zwei aufeinanderfolgenden Teilzonen gefundenen Frequenzen, z.B. $f_0$ und $f_1$, gleich gut zum vorgegebenen Muster passen und damit beide Frequenzen mit der gleichen Wahrscheinlichkeit der gesuchten Frequenz entsprechen. Dies ist z.B. bei Asynchronmotoren sehr oft der Fall, da hier ein Schlupf zwischen mechanischer Drehfrequenz und elektrischer Drehfrequenz vorliegt. Ist andererseits $\Delta p_0$ wesentlich größer als alle $\Delta p_i$ mit $i>0$, so kann man davon ausgehen, dass $f_0$ der gesuchten Frequenz entspricht.

Werden $N$ Iterationen ausgeführt, d.h. werden $N$ potenzielle Hauptdrehzahlen bestimmt, kann die Trust-Wahrscheinlichkeiten wie folgt normiert werden, um einen Trust-Wert $t_i$ zur Frequenz $f_i$ zu erhalten:

$$t_i = \frac{p_i - p_{i+1}}{p_0 - p_{N+1}}$$

Typischerweise kann ein Trust-Wert von mindestens 70% für eine potenzielle Hauptfrequenz $f_i$ als hinreichend groß angenommen werden. Setzt man $p_{N+2} = 0$, so kann man über diese Gleichung auch $t_{N+1}$ bestimmen, was als Maß für das Rauschverhalten des Signals gesehen werden kann. Falls $t_i \sim p_{N+1}$ entspricht, so hebt sich die Frequenz $f_i$ nicht sonderlich vom Rauschhintergrund ab.

**Patentansprüche**

1. Verfahren zur Bestimmung mindestens einer Drehzahl einer Maschine (10), wobei
   aus der Messung einer Schwingungsgröße an der Maschine über die Zeit das komplexe Spektrum dieser Größe ermittelt wird, wobei eine Frequenzinterpolation vorgenommen wird;
   Randbedingungen für die Auswertung des Spektrums festgelegt werden, welche den zulässigen Frequenzbereich einer erwarteten Hauptdrehzahl, einen Satz von auf die Hauptdrehzahl bezogenen relativen Frequenzen, sowie einen Gewichtungsfaktor für die jeweilige relative Frequenz beinhalten, wobei die relativen Frequenzen in Form von Frequenzmultiplikatoren festgelegt werden;
   eine spektrale Wahrscheinlichkeitsdichte unter Berücksichtigung der Randbedingungen berechnet wird, die sich für jede Frequenz des zulässigen Frequenzbereichs als Summe der mit dem jeweiligen Gewichtungsfaktor gewichteten Amplitude des Spektrums bei der mit dem jeweiligen Frequenzmultiplikator multiplizierten Frequenz ergibt; und
   die Hauptdrehzahl aus der Frequenz mit der maximalen Wahrscheinlichkeitsdichte ermittelt wird.

2. Verfahren gemäß Anspruch 1, **dadurch gekennzeichnet, dass** ein Satz von potentiellen Hauptdrehzahlen ermittelt wird, indem die Berechnung der Wahrscheinlichkeitsdichte und die Ermittlung der Hauptdrehzahl aus dem Maximum der Wahrscheinlichkeitsdichte iterativ ausgeführt wird, indem aus dem aktuellen Spektrum die Anteile der zuletzt ermittelten Hauptdrehzahl und ihrer relativen Frequenzen entfernt werden, um ein korrigiertes Spektrum zu erzeugen, das als Basis für die nächste Iteration dient, bei welcher eine neue potentielle Hauptdrehzahl aus dem Maximum einer neuen Wahrscheinlichkeitsdichte ermittelt wird, die unter Berücksichtigung der Randbedingungen aus dem korrigierten Spektrum berechnet wird.

3. Verfahren gemäß Anspruch 2, **dadurch gekennzeichnet, dass** beim Entfernen der Anteile der zuletzt ermittelten Hauptdrehzahl und ihrer relativen Frequenzen diese Anteile mit der Fourier-Transformierten einer zeitlichen Fensterfunktion multipliziert werden, um Fensterungseffekte im korrigierten Spektrum mindestens zum Teil zu vermeiden.

**4.** Verfahren gemäß Anspruch 2 oder 3, **dadurch gekennzeichnet, dass** für jede der ermittelten potentiellen Hauptdrehzahlen eine Trust-Wahrscheinlichkeit dafür ermittelt wird, dass es sich um die gesuchte Maschinendrehzahl handelt.

**5.** Verfahren gemäß Anspruch 4, **dadurch gekennzeichnet, dass** sich die Trust-Wahrscheinlichkeit einer potentiellen Hauptdrehzahl aus der über alle Frequenzen des zulässigen Frequenzbereichs integrierten Differenz der bei der Ermittlung der jeweiligen potentiellen Hauptdrehzahl verwendeten Wahrscheinlichkeitsdichte und der in der nächsten Iteration verwendeten Wahrscheinlichkeitsdichte ergibt.

**6.** Verfahren gemäß Anspruch 5, **dadurch gekennzeichnet, dass** für jede der ermittelten potentiellen Hauptdrehzahlen ein Trust-Wert ausgegeben wird, der sich aus der jeweiligen Trust-Wahrscheinlichkeit ergibt, geteilt durch die über alle Frequenzen des zulässigen Frequenzbereichs integrierten Differenz zwischen der in der ersten Iteration verwendeten Wahrscheinlichkeitsdichte und der aus dem in der letzten Iteration erhaltenen korrigierten Spektrum berechneten Wahrscheinlichkeitsdichte.

**7.** Verfahren gemäß Anspruch 6, **dadurch gekennzeichnet, dass** ein Trust-Wert von mindestens 70 % verlangt wird, um die Ermittlung der jeweiligen Hauptdrehzahl als Maschinendrehzahl zu akzeptieren.

**8.** Verfahren gemäß einem der vorhergehenden Ansprüche, **dadurch gekennzeichnet, dass** es sich bei den relativen Frequenzen um höhere Harmonische der Hauptdrehzahl handelt, wobei es sich bei den Frequenzmultiplikatoren um natürliche Zahlen handelt.

**9.** Verfahren gemäß Anspruch 8, **dadurch gekennzeichnet, dass** nicht mehr als die ersten fünf höheren Harmonischen berücksichtigt werden.

**10.** Verfahren gemäß einem der vorhergehenden Ansprüche, **dadurch gekennzeichnet, dass** das Spektrum mittels Überabtastung im Frequenzbereich ermittelt wird.

**11.** Verfahren gemäß Anspruch 10, **dadurch gekennzeichnet, dass** die Überabtastung im Frequenzbereich durch Augmentierung mit Nullen im Zeitsignal und anschließender Fourier-Transformation erfolgt.

**12.** Verfahren gemäß Anspruch 10 oder 11, **dadurch gekennzeichnet, dass** die Überabtastung mindestens achtfach ist.

**13.** Verfahren gemäß einem der vorhergehenden Ansprüche, **dadurch gekennzeichnet, dass** die Randbedingungen auf der Basis eines erwarteten Spektrums oder auf der Basis eines empirisch ermittelten Testsignals gewählt werden.

**14.** Verfahren gemäß einem der vorhergehenden Ansprüche, **dadurch gekennzeichnet, dass** es sich bei der Schwingungsmessgröße um eine Auslenkung, eine Geschwindigkeit oder eine Beschleunigung handelt.

**15.** System zur Bestimmung mindestens einer Drehzahl einer Maschine (10), mit
einem Sensor (12) zum Messen einer Schwingungsgröße an der Maschine über die Zeit, sowie
einer Auswertungseinrichtung (14), die ausgebildet ist, um

aus der Messung der Schwingungsgröße das komplexe Spektrum dieser Größe zu ermitteln, um eine Frequenzinterpolation vorzunehmen;
eine spektrale Wahrscheinlichkeitsdichte unter Berücksichtigung von Randbedingungen zu berechnen, welche den zulässigen Frequenzbereich der erwarteten Hauptdrehzahl, einen Satz von auf die Hauptdrehzahl bezogenen relativen Frequenzen, sowie einen Gewichtungsfaktor für die jeweilige relative Frequenz bein- halten, wobei die relativen Frequenzen in Form von Frequenzmultiplikatoren fest- gelegt werden, wobei sich die spektrale Wahrscheinlichkeitsdichte für jede Frequenz des zulässigen Frequenzbereichs als Summe der mit dem jeweiligen Gewichtungsfaktor gewichteten Amplitude des Spektrums bei der mit dem jeweiligen Frequenzmultiplikator multiplizierten Frequenz ergibt; und
die Hauptdrehzahl aus der Frequenz mit der maximalen Wahrscheinlichkeitsdichte zu ermitteln.

**Claims**

**1.** Method for determining at least one speed of a machine (10), wherein

on the basis of the measurement of a vibration variable carried out on the machine over time, the complex spectrum of this variable is determined, wherein a frequency interpolation is carried out; boundary conditions are established for the evaluation of the spectrum, which include the permissible frequency range of an expected main speed, a set of relative frequencies with respect to the main speed, and a weighting factor for the particular relative frequency, wherein the relative frequencies are established in the form of frequency multipliers;

a spectral probability density is calculated with consideration for these boundary conditions, which results for each frequency of the permissible frequency range as a sum of the amplitude of the spectrum, which has been weighted with the particular weighting factor, at the frequency multiplied by the particular frequency multiplier; and

the main speed is determined on the basis of the frequency having the maximum probability density.

2. Method according to Claim 1, **characterized in that** a set of potential main speeds is determined by iteratively carrying out the calculation of the probability density and the determination of the main speed on the basis of the maximum of the probability density by removing from the present spectrum the components of the most recently determined main speed and its relative frequencies, in order to produce a corrected spectrum which is used as the basis for the next iteration, in which a new potential main speed is determined on the basis of the maximum of a new probability density which is calculated on the basis of the corrected spectrum with consideration for the boundary conditions.

3. Method according to Claim 2, **characterized in that**, when the components of the most recently determined main speed and its relative frequencies are removed, these components are multiplied by the Fourier transform of a temporal window function, in order to at least partially avoid windowing effects in the corrected spectrum.

4. Method according to Claim 2 or 3, **characterized in that**, for each of the determined potential main speeds, a trust probability is determined that this is the sought machine speed.

5. Method according to Claim 4, **characterized in that** the trust probability of a potential main speed results from the difference, which has been integrated over all frequencies of the permissible frequency range, of the probability density utilized in the determination of the particular potential main speed and the probability density utilized in the next iteration.

6. Method according to Claim 5, **characterized in that** a trust value is provided for each of the determined potential main speeds, which results from the particular trust probability, divided by the difference, which has been integrated over all frequencies of the permissible frequency range, between the probability density utilized in the first iteration and the probability density calculated on the basis of the corrected spectrum obtained in the last iteration.

7. Method according to Claim 6, **characterized in that** a trust value of at least 70% is required in order to accept the determination of the particular main speed as the machine speed.

8. Method according to one of the preceding claims, **characterized in that** the relative frequencies are higher harmonics of the main speed, wherein the frequency multipliers are natural numbers.

9. Method according to Claim 8, **characterized in that** no more than the first five higher harmonics are taken into consideration.

10. Method according to one of the preceding claims, **characterized in that** the spectrum is determined by means of oversampling in the frequency range.

11. Method according to Claim 10, **characterized in that** the oversampling in the frequency range takes place via augmentation with zeros in the time signal and a subsequent Fourier transform.

12. Method according to Claim 10 or 11, **characterized in that** the oversampling is at least eight-fold.

13. Method according to one of the preceding claims, **characterized in that** the boundary conditions are selected on the basis of an expected spectrum or on the basis of an empirically determined test signal.

14. Method according to one of the preceding claims, **characterized in that** the vibration measurement variable is a deflection, a speed, or an acceleration.

**15.** System for determining at least one speed of a machine (10), comprising
a sensor (12) for measuring a vibration variable on the machine over time and
an evaluation device (14) which is designed for
determining the complex spectrum of this variable on the basis of the measurement of the vibration variable, in order to carry out a frequency interpolation;
calculating a spectral probability density with consideration for boundary conditions which include the permissible frequency range of the expected main speed, a set of relative frequencies with respect to the main speed, and a weighting factor for the particular relative frequency, wherein the relative frequencies are established in the form of frequency multipliers, wherein the spectral probability density results for each frequency of the permissible frequency range as a sum of the amplitude of the spectrum, which has been weighted with the particular weighting factor, at the frequency multiplied by the particular frequency multiplier; and
determining the main speed on the basis of the frequency having the maximum probability density.

## Revendications

**1.** Procédé de détermination d'au moins une vitesse de rotation d'une machine (10), selon lequel
le spectre complexe d'une grandeur d'oscillation au niveau de la machine est déterminé à partir de la mesure dans le temps de cette grandeur, une interpolation des fréquences étant effectuée ;
des conditions aux limites sont fixées pour l'interprétation du spectre, lesquelles contiennent la plage de fréquences admissible d'une vitesse de rotation principale attendue, un jeu de fréquences relatives rapportées à la vitesse de rotation principale, ainsi qu'un facteur de pondération pour la fréquence relative respective, les fréquences relatives étant fixées sous la forme de multiplicateurs de fréquence ;
une densité de probabilité spectrale est calculée en tenant compte des conditions aux limites, laquelle est obtenue, pour chaque fréquence de la plage de fréquences admissible, en tant que somme de l'amplitude du spectre pondérée avec le facteur de pondération respectif à la fréquence multipliée par le multiplicateur de fréquence respectif ; et
la vitesse de rotation principale est déterminée à partir de la fréquence ayant la densité de probabilité maximale.

**2.** Procédé selon la revendication 1, **caractérisé en ce qu'**un jeu de vitesses de rotation principales potentielles est déterminé en exécutant de manière itérative le calcul de la densité de probabilité et la détermination de la vitesse de rotation principale à partir du maximum de la densité de probabilité, en supprimant du spectre actuel les parts de la vitesse de rotation principale déterminée en dernier et de ses fréquences relatives afin de produire un spectre corrigé qui sert de base pour la prochaine itération, lors de laquelle une nouvelle vitesse de rotation principale potentielle est déterminée à partir du maximum d'une nouvelle densité de probabilité qui est calculée à partir du spectre corrigé en tenant compte des conditions aux limites.

**3.** Procédé selon la revendication 2, **caractérisé en ce que** lors de la suppression des parts de la vitesse de rotation principale déterminée en dernier et de ses fréquences relatives, ces parts sont multipliées par la transformée de Fourier d'une fonction de fenêtre temporelle afin d'éviter au moins en partie des effets de fenêtrage dans le spectre corrigé.

**4.** Procédé selon la revendication 2 ou 3, **caractérisé en ce que** pour chacune des vitesses de rotation principales potentielles déterminées, une probabilité de confiance qu'il s'agit de la vitesse de rotation de machine recherchée est déterminée.

**5.** Procédé selon la revendication 4, **caractérisé en ce que** la probabilité de confiance d'une vitesse de rotation principale potentielle résulte de la différence, intégrée sur toutes les fréquences de la plage de fréquences admissible, de la densité de probabilité utilisée lors de la détermination de la vitesse de rotation principale potentielle respective et de la densité de probabilité utilisée dans la prochaine itération.

**6.** Procédé selon la revendication 5, **caractérisé en ce qu'**une valeur de confiance est délivrée pour chacune des vitesses de rotation principales potentielles déterminées, laquelle résulte de la probabilité de confiance respective, divisée par la différence, intégrée sur toutes les fréquences de la plage de fréquences admissible, entre la densité de probabilité utilisée dans la première itération et la densité de probabilité calculée à partir du spectre corrigé obtenu dans la dernière itération.

**7.** Procédé selon la revendication 6, **caractérisé en ce qu'**une valeur de confiance d'au moins 70 % est exigée pour accepter la détermination de la vitesse de rotation principale respective en tant que vitesse de rotation de machine.

8. Procédé selon l'une des revendications précédentes, **caractérisé en ce que** les fréquences relatives sont les harmoniques supérieures de la vitesse de rotation principale, les multiplicateurs de fréquence étant des nombres naturels.

9. Procédé selon la revendication 8, **caractérisé en ce que** ne sont pas prises en compte plus que les cinq premières harmoniques supérieures.

10. Procédé selon l'une des revendications précédentes, **caractérisé en ce que** le spectre est déterminé au moyen d'un suréchantillonnage dans la plage de fréquences.

11. Procédé selon la revendication 10, **caractérisé en ce que** le suréchantillonnage dans la plage de fréquences est effectué par une augmentation avec des zéros dans le signal de temps et ensuite une transformée de Fourier.

12. Procédé selon la revendication 10 ou 11, **caractérisé en ce que** le suréchantillonnage est au moins octuple.

13. Procédé selon l'une des revendications précédentes, **caractérisé en ce que** les conditions aux limites sont choisies sur la base d'un spectre attendu ou sur la base d'un signal de test déterminé empiriquement.

14. Procédé selon l'une des revendications précédentes, **caractérisé en ce que** la grandeur mesurée d'oscillation est une déviation, une vitesse ou une accélération.

15. Système de détermination d'au moins une vitesse de rotation d'une machine (10), comprenant
un capteur (12) destiné à mesurer une grandeur d'oscillation au niveau de la machine dans le temps, et un dispositif d'interprétation (14), qui est configuré pour
déterminer le spectre complexe de la grandeur d'oscillation à partir de la mesure de cette grandeur, afin d'effectuer une interpolation des fréquences ;
calculer une densité de probabilité spectrale en tenant compte de conditions aux limites, lesquelles contiennent la plage de fréquences admissible de la vitesse de rotation principale attendue, un jeu de fréquences relatives rapportées à la vitesse de rotation principale, ainsi qu'un facteur de pondération pour la fréquence relative respective, les fréquences relatives étant fixées sous la forme de multiplicateurs de fréquence, la densité de probabilité spectrale pour chaque fréquence de la plage de fréquences admissible étant obtenue en tant que somme de l'amplitude du spectre pondérée avec le facteur de pondération respectif à la fréquence multipliée par le multiplicateur de fréquence respectif ; et
déterminer la vitesse de rotation principale à partir de la fréquence ayant la densité de probabilité maximale.

Fig. 1

Fig. 2a

Fig. 2b

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6087796 A
- US 20070032966 A1
- US 5744723 A

- GB 2466472 A
- US 5530343 A
- DE 102004010263 A1